Europäisches Patentamt

European Patent Office

Office européen des brevets

(19)

(11) **EP 0 617 081 B1**

(12) **EUROPÄISCHE PATENTSCHRIFT**

(45) Veröffentlichungstag und Bekanntmachung des Hinweises auf die Patenterteilung:
**11.06.1997   Patentblatt 1997/24**

(51) Int Cl.⁶: **C08L 23/06**

(21) Anmeldenummer: **94103976.0**

(22) Anmeldetag: **15.03.1994**

(54) **Polyethylenmassen zum Spritzgiessen**

Polyethylene composition for injection moulding

Composition à base de polyéthylène pour moulage par injection

(84) Benannte Vertragsstaaten:
**AT BE CH DE ES FR GB IT LI NL SE**

(30) Priorität: **24.03.1993  DE 4309456**

(43) Veröffentlichungstag der Anmeldung:
**28.09.1994   Patentblatt 1994/39**

(73) Patentinhaber: **HOECHST AKTIENGESELLSCHAFT
65926 Frankfurt am Main (DE)**

(72) Erfinder:
• **Ehlers, Jens, Dr. Dipl.-Chem.
D-46147 Oberhausen (DE)**
• **Freisler, Norbert, Dipl.-Ing.
D-44265 Dortmund (DE)**
• **van Laak, Hermann, Dipl.-Ing.
D-46569 Hünxe (DE)**

(56) Entgegenhaltungen:
**EP-A- 0 318 190**

**Beschreibung**

Die vorliegende Erfindung betrifft ultrahochmolekulares Polyethylen (PE-UHMW) enthaltende Polyethylenmassen zum Spritzgießen.

Unter den Polyethylenen nehmen die PE-UHMW-Typen eine Sonderstellung ein. Man versteht hierunter nach dem Niederdruckverfahren erhaltene, lineare Polyethylene mit extrem hoher Schmelzviskosität. Sie sind durch eine Grenzviskositätszahl von 1.000 bis 5.000 ml/g gekennzeichnet.

Ultrahochmolekulares Polyethylen zeichnet sich durch eine Reihe physikalischer Kenndaten aus, die ihm vielfältige Einsatzmöglichkeiten eröffnen. Hervorzuheben sind sein hoher Verschleißwiderstand, sein niedriger Reibungskoeffizient gegenüber anderen Werkstoffen und sein ausgezeichnetes Zähigkeitsverhalten. Überdies ist es bemerkenswert beständig gegenüber zahlreichen Chemikalien.

Aufgrund seines günstigen tribologischen und chemischen Verhaltens und seiner hohen Zähigkeit hat PE-UHMW in den verschiedensten Anwendungsgebieten Eingang als vielseitiger Werkstoff gefunden. Als Beispiele seien genannt die Textilindustrie, der Maschinenbau, die chemische Industrie und der Bergbau.

Ein bedeutender Anteil des bei der Synthese als Pulver anfallenden PE-UHMW wird nach unterschiedlichen Verfahren zu Halbzeug gesintert, aus dem, spanabhebend, Formkörper für die verschiedensten Anwendungsgebiete erzeugt werden. Häufig bereitet es aber Schwierigkeiten, aus PE-UHMW nach den für Thermoplaste gängigen Methoden Formkörper herzustellen. So neigt ultrahochmolekulares Polyethylen bei der Verarbeitung nach der konventionellen Spritzgußtechnik in Abhängigkeit von den angewandten Verfahrensparametern und beeinflußt von der länge der in Fließrichtung ebenen Formabschnitte unterschiedlich stark zur Hautbildung (Delamination). An der Oberfläche des Formteils entstehen schuppenartige Schichten, die sich vom Kernmaterial leicht abziehen lassen. Diese Erscheinung führt zu erhöhter Abnutzung des aus PE-UHMW hergestellten Formkörpers, die im Gegensatz zur ausgezeichneten Verschleißfestigkeit von Werkteilen steht, die durch Preßverfahren erzeugt wurden. Zur Behebung dieses Mangels sind verschiedene Maßnahmen ergriffen worden. Sie bestehen insbesondere in der speziellen Ausgestaltung der Spritzgußmaschinen oder in der Bereitstellung modifizierter ultrahochmolekularer Polyethylene, die für das Spritzgießen geeignet sind.

Nach der DE-C-2 600 923 spritzt man zur Bildung pulverförmiger Teilchen geschmolzenes PE-UHMW bei 140 bis 300°C mit einer Schergeschwindigkeit von 50.000 bis 1 Million sec$^{-1}$, gemessen am Steg der Spritzdüse, in eine Werkzeughöhlung, deren Volumen 1,5 bis 3,0 mal größer ist, als das Volumen des eingespritzten Polyethylens und verringert darauf das Volumen der Hohlform auf weniger als das 1,5-fache des eingespritzten Polyethylens.

Eine Fortentwicklung des vorstehend beschriebenen Verfahrens ist Gegenstand der FR-A-2 503 625. Es besteht darin, auf 170 bis 240°C erhitztes PE-UHMW in einen Formhohlraum zu spritzen, der sein Volumen während dieses Vorganges um mindestens 40 % vergrößert und nach Vollendung des Einspritzens, während sich das Material in der Form noch im geschmolzenen Zustand befindet, verkleinert.

Beide Verfahren erfordern die Verwendung von Spritzgußmaschinen, die mit speziellen Werkzeugen ausgerüstet sind, nämlich solchen, deren Hohlformvolumen veränderlich ist. Übliche Spritzgußanlagen sind zur Durchführung dieser Prozesse ungeeignet.

Statt besondere Verarbeitungsmaschinen einzusetzen, hat man für die Herstellung von Formkörpern aus PE-UHMW durch Spritzguß auch spezielle Polymerisate entwickelt. So betrifft die US-A-4 786 687 für die Spritzgußverarbeitung geeignete ultrahochmolekulare Polyethylene, die in einem Zweistufenprozeß gewonnen werden. In einer ersten Stufe polymerisiert man Ethylen in Gegenwart eines festen, Magnesium, Titan und/oder Vanadium und eine metallorganische Verbindung enthaltenden Katalysators in Abwesenheit von Wasserstoff. Anschließend wird in einer zweiten Stufe im selben Reaktor Ethylen in Gegenwart von Wasserstoff polymerisiert.

Ebenfalls in einem Mehrstufenprozeß erhält man eine zum Spritzgießen geeignete PE-UHMW enthaltende Polyethylenmasse nach einem Verfahren, das in der EP-B-02 74 536 beschrieben ist. Hierzu wird Ethylen in zumindest einer Polymerisationsstufe in Abwesenheit und in einer anderen Polymerisationsstufe in Gegenwart von Wasserstoff polymerisiert. In den einzelnen Reaktionsstufen liegt jeweils ein Katalysator vom Ziegler-Typ vor, der aus einer hochaktiven Katalysatorkomponente, die Magnesium, Titan und Halogen als wesentliche Bestandteile enthält und einer aluminiumorganischen Verbindung als weitere Katalysatorkomponente besteht.

Schließlich finden sich in der Patentliteratur auch Hinweise auf PE-UHMW-Massen, die formbar sind und durch Mischen von ultrahochmolekularem Polyethylen mit Polyethylen oder anderen Polyolefinen niedrigerer Molmasse hergestellt werden. Nach der veröffentlichten japanischen Patentanmeldung 177036/1982 enthalten solche Formmassen 100 Teile Polyethylen mit einer Molmasse oberhalb 10$^6$ g/mol und 10 bis 60 Teile Polyethylen mit einer Molmasse von 5.000 bis 20.000 g/mol. In der veröffentlichten japanischen Patentanmeldung 126446/1984 werden Mischungen aus 50 bis 95 Teilen ultrahochmolekularem Polyethylen und 50 bis 5 Teilen eines Allzweckpolyolefins beschrieben. Auf die Verarbeitung dieser Massen durch Spritzgießen wird in keiner der Veröffentlichungen eingegangen.

Es bestand daher die Aufgabe, ultrahochmolekulares Polyethylen enthaltende Formmassen bereitzustellen, die auf gebräuchlichen Spritzgußmaschinen zu Formkörpern verarbeitet werden können. Dabei soll ein möglichst hoher PE-UHMW-Anteil in der Formmasse sicherstellen, daß aus ihr erzeugte Formkörper eine ausgezeichnete Verschleißfestigkeit und eine hervorragende Kerbschlagzähigkeit aufweisen.

Diese Aufgabe wird gelöst durch Polyethylenmassen zur Verarbeitung durch Spritzgießen, die 40 bis 99 Gew.-% eines ersten Polyethylens mit einer Grenzviskositätszahl von 1.000 bis 5.000 ml/g und 60 bis 1 Gew.-% eines zweiten Polyethylens mit einer Grenzviskositätszahl von 100 bis 700 ml/g enthalten, wobei die Molmassenverteilung jeder der Polyethylenkomponenten kleiner als 9 ist und die Grenzviskositätszahl der Masse mindestens 1.000 ml/g beträgt.

Die Polyethylenmassen gemäß der Erfindung lassen sich auf herkömmlichen Spritzgußmaschinen problemlos zu Formkörpern verarbeiten, die keine Hautbildung zeigen und sich durch hohe Verschleißfestigkeit und Kerbschlagzähigkeit auszeichnen.

Die Mischungsbestandteile der neuen Polyethylenmassen werden durch die Grenzviskositätszahl (auch als Staudinger-Index oder intrinsic viscosity bezeichnet) $[\eta]$ charakterisiert. Sie wird aus der Viskositätszahl $\eta$ (experimentell bestimmt in Dekalin als Lösungsmittel bei 135°C; vgl. hierzu DIN 53 728 Blatt 4) nach der Martin-Gleichung

$$\log\eta = \log [\eta] + K . [\eta] . c$$

mit $K = 0{,}139$ und $c = 0{,}03$ g/dl für PE-Typen mit einer Grenzviskositätszahl von 1000 bis 5000 ml/g und $c = 0{,}1$ g/dl für PE-Typen mit einer Grenzviskositätszahl von 100 bis 700 ml/g, ermittelt.

Der PE-UHMW-Anteil der Formmassen ist durch eine Grenzviskositätszahl zwischen 1000 und 5000 ml/g, vorzugsweise 3000 bis 4000 ml/g gekennzeichnet. Als weitere Komponente enthalten die Formmassen ein Polyethylen (im folgenden auch als PE-NMW bezeichnet), dessen Grenzviskositätszahl 100 bis 700 ml/g, insbesondere 200 bis 500 ml/g beträgt.

Zusätzlich werden die Mischungskomponenten der erfindungsgemäßen Formmassen durch die Molmassenverteilung beschrieben. Unter diesem Begriff versteht man den Quotienten aus dem Gewichtsmittel der Molmasse ($M_w$) und dem Zahlenmittel der Molmasse ($M_n$). Die Bestimmung der Molmassenverteilung erfolgt durch Gelpermeationschromatographie (vgl. Encycl. Polym. Sci. Engng. Bd. 10, Seiten 12 ff). Die Molmassenverteilung jeder der Polyethylen-Mischungskomponenten ist kleiner als 9 und beträgt vorzugsweise 4 bis 8.

In den neuen, zur Verarbeitung durch Spritzguß geeigneten Polyethylenmassen beträgt der PE-UHMW-Anteil 40 bis 99 Gew.-% und der PE-NMW-Anteil 1 bis 60 Gew.-% (die %-Angaben beziehen sich jeweils auf die Mischung). Bevorzugt werden Mischungen, die 60 bis 80 Gew.-% PE-UHMW) und 40 bis 20 Gew.-% PE-NMW enthalten. Die jeweilige Menge der Polyethylen-Komponenten im Gemisch hängt von der Grenzviskositätszahl der Komponenten ab und ist so zu bemessen, daß die Grenzviskositätszahl der Mischung mindestens 1000 ml/g, vorzugsweise mehr als 1.500 ml/g beträgt. Die Grenzviskositätszahl der Mischung $[\eta]_b$ wird nach der Gleichung

$$[\eta]_b = (W_{NMW} [\eta]_{NMW}^{1/a} + W_{UHMW} [\eta]_{UHMW}^{1/a})^a$$

aus den Grenzviskositätszahlen $[\eta]_{NMW}$ und $[\eta]_{UHMW}$ der Komponenten und ihrem Anteil $W_{NMW}$ und $W_{UHMW}$ an der Mischung in Gew.-% berechnet. Der Exponent a hat nach der Margolies-Beziehung (Margolies, The Effect of Molecular Weight on the Physical Properties of HDPE, Plastics Div. Allied Chemical Corp., Clifton, N.J.) den Wert 0,67.

Die Herstellung der Mischungsbestandteile PE-UHMW und PE-NMW mit der geforderten Grenzviskositätszahl und der Molmassenverteilung erfolgt nach bekannten Verfahren. Ein bewährter Prozess, der zu Polyethylenen des PE-UHMW-Typs mit einer viskosimetrisch gemessenen mittleren Molmasse von mindestens 500.000 g/mol, vorzugsweise $1 . 10^6$ g/mol bis $1 . 10^7$ g/mol führt, ist Gegenstand der DE-C-2 361 508. Er arbeitet bei Drücken von 0,1 bis 10 MPa und Temperaturen von 30 bis 130°C unter Verwendung von Katalysatoren aus Titan(III)-halogeniden und organischen Aluminiumverbindungen. Auch andere Verfahren sind geeignet, z.B. die ebenfalls unter niedrigen Drücken ablaufende Ethylenpolymerisation in Gegenwart von Chromoxid-Katalysatoren.

PE-NMW, das den genannten Forderungen entspricht, erhält man z.B. nach einer Arbeitsweise, die in der DE-C-2 837 481 beschrieben ist. Hierbei verwendet man gesondert hergestellte Ti(III)-halogenide und organische Aluminiumverbindungen als Katalystoren und regelt die Molmasse des Polymerisats mit Sauerstoff und gegebenenfalls Wasserstoff. Die Umsetzung verläuft bei 20 bis 250°C und 0,1 bis 10 MPa.

Die Herstellung der erfindungsgemäßen Polyethylenmassen erfolgt durch homogene Mischung der Ausgangsmaterialien in einem geeigneten Mischer. Dem Polymerisatgemisch können weitere Stoffe zugesetzt werden. Zu ihnen zählen übliche Verarbeitungshilfsmittel und Stabilisatoren wie Antistatika, Korrosionsschutzmittel, Licht- und Wärmestabilisatoren. Weiterhin können Pigmente und/oder Füllstoffe Bestandteile des Polymerisatgemischs sein. Als Füllstoffe kommen z.B. anorganische Materialien wie Kieselsäure in ihren verschiedenen natürlichen oder industriell erzeugten Erscheinungsformen, natürliche oder künstliche Aluminium- oder Magnesiumsilikate, ferner Zeolithe, Calciumcarbonat und Bariumsulfat in Betracht. Füllstoffe können auch Kugeln, z.B. aus Glas und Fasern, z.B. aus Glas, Kohlenstoff, Bor, Polyestern oder Polyamiden sein. Schließlich können den Gemischen auch Schmier- und Gleitmittel zugesetzt werden.

In den nachfolgenden Beispielen werden die neuen Polyethylenmassen näher beschrieben. Selbstverständlich ist die Erfindung nicht auf die dargestellten Ausführungsformen beschränkt.

Beispiele

In den Beispielen werden zwei PE-UHMW- und zwei PE-NMW- Typen eingesetzt, die durch die in Tabelle 1 zusammengestellten Grenzviskositätszahlen ([η]) und Molmassenverteilungen (MMV) gekennzeichnet sind; als typgerecht werden Polymerisate bezeichnet, die hinsichtlich [η] und MMV die erfindungsgemäßen Anforderungen erfüllen, die übrigen werden als nicht typgerecht gewertet.

Tabelle 1

| Polyethylen | [η] ml/g | MMV | Anmerkungen |
|---|---|---|---|
| PE-UHMW 1 | 3.500 | etwa 7 | typgerecht |
| PE-UHMW 2 | 3.450 | etwa 15 | nicht typgerecht |
| PE-NMW 1 | 465±15 | etwa 7 | typgerecht |
| PE-NMW 2 | 445 | etwa 15 | nicht typgerecht |

Aus den PE-Komponenten werden Mischungen heigeszellt, die jeweils 80 Gew.-% PE-UHMW und 20 Gew.-% PE-NMW enthalten. Die rechnerisch ermittelten Grenzviskositätszahlen $[η]_B$ der Mischungen sind in Tabelle 2 aufgeführt, ebenso die Bewertung, ob es sich um typgerechte oder nicht typgerechte Mischungen handelt.

Tabelle 2

| Mischungen | $[η]_B$ ml/g | Anmerkungen |
|---|---|---|
| Mischung 1:<br>PE-UHMW 1 + PE-NMW 1 | 3040 | typgerecht |
| Mischung 2:<br>PE-UHMW 1 + PE-NMW 2 | 3035 | nicht typgerecht |
| Mischung 3:<br>PE-UHMW 2 + PE-NMW 1 | 2995 | nicht typgerecht |
| Mischung 4:<br>PE-UHMW 2 + PE-NMW 2 | 2995 | nicht typgerecht |

Die Polyethylene PE-UHMW 1 und PE-NMW 1 und die Mischungen 1 bis 4 werden auf einer Spritzgußmaschine (Mannesmann Demag D 175; Schließkraft 1,75 t, Schneckendurchmesser 52 mm) zu einem Formkörper mit den Außenmaßen 180 x 50 x 36,5 mm und einer Wandstärke von 10 mm als Probekörper unter den nachstehenden Bedingungen verarbeitet:

| | |
|---|---|
| Einspritzdruck | 135 MPa |
| Massetemperatur | 240 ± 5°C |
| Werkzeugtemperatur | 40 ± 5°C |
| Schneckenvorlauf | 30 mm/s |

Zur Beurteilung des Delaminationsverhaltens wird folgender Versuch durchgeführt:

Jeweils ein Ausschnitt der Probekörper mit den Abmessungen 180 x 15 x 10 mm wird in der Weise in eine Biegevorrichtung eingelegt, daß die durch Spritzgießen erzeugten Oberflächen während des Versuchs an 2 Stellen unter Winkeln von etwa 80° um jeweils etwa 40 % gestaucht (innerer Radius) oder gedehnt (äußerer Radius) werden. Die Biegestellen liegen so weit von der Bindenaht in der Mitte des Probekörpers entfernt, daß in diesen Bereichen für das Füllen der Kavität ein Fließen des Werkstoffes sichergestellt ist. Die Beurteilung der Oberflächengüte in den gestauchten und in den gedehnten Bereichen, d.h. die Neigung unterschiedlicher Werkstoffe zur Bildung laminarer Strukturen, erfolgt optisch.

Tabelle 3

| Versuch | Werkstoff | Oberflächen nach Biegen |
|---|---|---|
| 1 | PE-UHMW 1 | rissig - abgeplatzt |
| 2 | PE-NMW 1 | abgeplatzt |
| 3 | Mischung 1 | glatt |
| 4 | Mischung 2 | rissig |
| 5 | Mischung 3 | glatt - rissig |
| 6 | Mischung 4 | rissig - abgeplatzt |

Tabelle 3 zeigt, daß sich die Einzelkomponenten trotz enger Molmassenverteilung durch Spritzguß nicht zu Formkörpern verarbeiten lassen, die einwandfreie Oberflächen aufweisen (Versuche 1, 2). Das gleiche gilt, wenn eine PE-Komponente mit enger Molmassenverteilung und eine PE-Komponente mit breiter Molmassenverteilung miteinander kombiniert werden (Versuche 4, 5). Nur Mischungen aus PE-UHMW und PE-NMW (Versuch 3), die jeweils enge Molmassenverteilungen zeigen, führen durch Spritzguß zu Formkörpern mit optisch einwandfreier Oberfläche.

**Patentansprüche**

1. Polyethylenmassen zur Verarbeitung durch Spritzgießen, die, jeweils bezogen auf die Massen, 40 bis 99 Gew.-% eines ersten Polyethylens mit einer Grenzviskositätszahl von 1.000 bis 5.000 ml/g und 60 bis 1 Gew.-% eines zweiten Polyethylens mit einer Grenzviskositätszahl von 100 bis 700 ml/g enthalten, wobei die Molmassenverteilung jeder der Polyethylenkomponenten kleiner als 9 ist und die Grenzviskositätszahl der Massen mindestens 1.000 ml/g beträgt.

2. Polyethylenmassen nach Anspruch 1, dadurch gekennzeichnet, daß die Grenzviskositätszahl des ersten Polyethylens 3.000 bis 4.000 ml/g beträgt.

3. Polyethylenmassen nach Anspruch 1 oder 2, dadurch gekennzeichnet, daß die Grenzviskositätszahl des zweiten Polyethylens 200 bis 500 beträgt.

4. Polyethylenmassen nach einem oder mehreren der Ansprüche 1 bis 3, dadurch gekennzeichnet, daß das erste und das zweite Polyethylen eine Molmassenverteilung von 4 bis 8 aufweist.

5. Polyethylenmassen nach einem oder mehreren der Ansprüche 1 bis 4, dadurch gekennzeichnet, daß der Anteil des ersten Polyethylens mit einer Grenzviskositätszahl von 1.000 bis 5.000 ml/g 60 bis 80 Gew.-% und der Anteil des zweiten Polyethylens mit einer Grenzviskositätszahl von 100 bis 700 ml/g 40 bis 20 Gew.-%, jeweils bezogen auf die Massen, beträgt.

6. Polyethylenmassen nach einem oder mehreren der Ansprüche 1 bis 5, dadurch gekennzeichnet, daß die Grenzviskositätszahl der Massen größer als 1.500 ml/g ist.

**Claims**

1. A polyethylene composition for processing by injection molding which comprises, in each case based on the composition, 40 to 99% by weight of a first polyethylene having a limiting viscosity number of 1000 to 5000 ml/g and 60 to 1% by weight of a second polyethylene having a limiting viscosity number of 100 to 700 ml/g, the molecular weight distribution of each of the polyethylene components being less than 9 and the limiting viscosity number of the composition being at least 1000 ml/g.

2. A polyethylene composition as claimed in claim 1, wherein the limiting viscosity number of the first polyethylene is 3000 to 4000 ml/g.

3. A polyethylene composition as claimed in claim 1 or 2, wherein the limiting viscosity number of the second polyethylene is 200 to 500.

4. A polyethylene composition as claimed in one or more of claims 1 to 3, wherein the first and the second polyethylene have a molecular weight distribution of 4 to 8.

5. A polyethylene composition as claimed in one or more of claims 1 to 4, wherein the content of the first polyethylene having a limiting viscosity number of 1000 to 5000 ml/g is 60 to 80% by weight and the content of the second polyethylene having a limiting viscosity number of 100 to 700 ml/g is 40 to 20% by weight, in each case based on the composition.

6. A polyethylene composition as claimed in one or more of claims 1 to 5, wherein the limiting viscosity number of the composition is greater than 1500 ml/g.

**Revendications**

1. Matières de polyéthylène pour le façonnage par moulage par injection, qui contiennent à chaque fois rapportés aux matières de 40 à 99% en poids d'un premier polyéthylène avec un indice de viscosité limite de 1 000 à 5 000 ml/g et de 60 à 1 % en poids d'un second polyéthylène avec un indice de viscosité limite de 100 à 700 ml/g, la distribution de masse molaire de chacun des constituants de polyéthylène étant inférieure à 9 et l'indice de viscosité limite des matières étant d'au moins 1 000 ml/g.

2. Matières de polyéthylène selon la revendication 1, caractérisées en ce que l'indice de viscosité limite du premier polyéthylène est de 3 000 à 4 000 ml/g.

3. Matières de polyéthylène selon la revendication 1 ou 2, caractérisées en ce que l'indice de viscosité limite du second polyéthylène est de 200 à 500.

4. Matières de polyéthylène selon l'une ou plusieurs quelconques des revendications 1 à 3, caractérisées en ce que le premier et le second polyéthylène présentent une distribution de masse molaire de 4 à 8.

5. Matières de polyéthylène selon l'une ou plusieurs quelconques des revendications 1 à 4, caractérisées en ce que la part en premier polyéthylène avec un indice de viscosité limite de 1 000 à 5 000 ml/g est de 60 à 80% en poids et la part en second polyéthylène avec un indice de viscosité limite de 100 à 700 ml/g est de 40 à 20% en poids, rapportés à chaque fois aux matières.

6. Matières de polyéthylène selon l'une ou plusieurs quelconques des revendications 1 à 5, caractérisées en ce que l'indice de viscosité limite des matières est supérieur à 1 500 ml/g.